(19) Europäisches Patentamt
European Patent Office
Office européen des brevets

(11) **EP 3 083 503 B1**

(12) **EUROPÄISCHE PATENTSCHRIFT**

(45) Veröffentlichungstag und Bekanntmachung des Hinweises auf die Patenterteilung:
**08.08.2018  Patentblatt 2018/32**

(21) Anmeldenummer: **13830214.6**

(22) Anmeldetag: **17.12.2013**

(51) Int Cl.:
***C02F 1/00*** *(2006.01)*

(86) Internationale Anmeldenummer:
**PCT/EP2013/076908**

(87) Internationale Veröffentlichungsnummer:
**WO 2015/090366 (25.06.2015 Gazette 2015/25)**

(54) **VERSCHNEIDUNGSSTEUERUNG MIT ROHWASSERHÄRTEBESTIMMUNG ÜBER DIE LEITFÄHIGKEIT DES WEICH- UND VERSCHNITTWASSERS**

BLENDING CONTROL METHOD WITH DETERMINATION OF UNTREATED WATER HARDNESS VIA THE CONDUCTIVITY OF THE SOFT WATER AND BLENDED WATER

COMMANDE DE MÉLANGE AVEC DÉTERMINATION DE LA DURETÉ DE L'EAU BRUTE À L'AIDE DE LA CONDUCTIVITÉ DE L'EAU ADOUCIE ET DE L'EAU MÉLANGÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2016  Patentblatt 2016/43**

(73) Patentinhaber: **Judo Wasseraufbereitung GmbH 71364 Winnenden (DE)**

(72) Erfinder:
• **DOPSLAFF, Hartmut 71364 Winnenden (DE)**

• **DOPSLAFF, Carsten H. 71364 Winnenden (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
EP-A1- 2 196 885          DE-A1-102009 055 007
DE-A1-102010 001 373      DE-A1-102010 042 541
DE-A1-102011 003 326      DE-B3-102007 059 058
JP-A- 2000 033 250        US-A1- 2009 114 598
US-A1- 2013 161 256

**Beschreibung**

Die Erfindung betrifft ein Verfahren zum Betrieb einer Wasserenthärtungsanlage mit einer automatischen Verschneideeinrichtung, wobei ein zufließender Rohwasserstrom $V_{roh}$ aufgeteilt wird auf

- einen ersten Teilstrom $V_{teil1}$, der enthärtet wird, und
- einen zweiten Teilstrom $V_{teil2}$, der nicht enthärtet wird,

und die beiden Teilströme $V_{teil1}$, $V_{teil2}$ zu einem Verschnittwasserstrom $V_{verschnitt}$ vereinigt werden,
wobei die Anteile der beiden Teilströme $A_{teil1}$, $A_{teil2}$ am Verschnittwasserstrom $V_{verschnitt}$ von der automatischen Verschneideeinrichtung so eingestellt werden, dass sich eine gewünschte Härte SW im Verschnittwasserstrom $V_{verschnitt}$ ergibt, wobei die einzustellenden Anteile der beiden Teilströme $A_{teil1}$, $A_{teil2}$ aus der Härte des Rohwassers $H_{roh}$ und der Härte des enthärteten Wassers $H_{weich}$ berechnet werden,
und wobei die Härte des Rohwassers $H_{roh}$ aus der Leitfähigkeit des Rohwassers $LF_{roh}$ abgeleitet wird.

Ein solches Verfahren ist bekannt geworden aus der DE 10 2009 055 007 A1, DE 10 2010 001 373 A1 oder DE 10 2011 003 326 A1. Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist. Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Aus technischen oder wirtschaftlichen Gründen ist es oft notwendig oder erwünscht, kein vollenthärtetes Wasser, sondern Wasser mit einer mittleren, jedoch eng definierten Wasserhärte zur Verfügung zu haben. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit hohen Kosten verbunden.

Zur Durchführung einer Teilenthärtung ist eine Vorrichtung (Verschneideeinrichtung) zum Mischen von enthärtetem Wasser (auch als Reinwasser oder Weichwasser bezeichnet) und Rohwasser notwendig. In der Regel ist es erwünscht, die Wasserhärte im Verschnittwasser, das ist das Gemisch von enthärtetem Wasser und Rohwasser, auf einen vorgegebenen Sollwert einzustellen.

Eine unmittelbare Bestimmung der Härte eines Verschnittwassers, mit der eine Feedback-Regelung der Anteile eines weichwasserführenden Teilstroms und eines rohwasserführenden Teilstroms eingerichtet werden könnte, ist mit einer so genannten ionenselektiven Elektrode im Verschnittwasserbereich grundsätzlich möglich. Die ionenselektive Elektrode ist jedoch wartungsintensiv und störungsanfällig.

Daher erfolgt die Einregelung der Härte des Verschnittwasserstroms im Stand der Technik meist dadurch, dass ein rohwasserführender Teilstrom mit zumindest näherungsweise bekannter Rohwasserhärte und ein weichwasserführender Teilstrom mit ebenfalls zumindest näherungsweise bekannter Weichwasserhärte in solchen Anteilen zu einem Verschnittwasserstrom vermischt werden, dass sich die gewünschte Verschnittwasserhärte ergibt, vgl. DE 10 2007 059 058 B3. In dieser Druckschrift wird zur Bestimmung der Rohwasserhärte dabei die Rohwasserleitfähigkeit mit einem Leitfähigkeitssensor im Rohwasser bestimmt, und die Rohwasserleitfähigkeit wird mit einer Kalibrierkennlinie in die Rohwasserhärte umgerechnet. Nachteilig an diesem Vorgehen ist es, dass die Elektroden des Leitfähigkeitssensors im Rohwasser leicht verkalken können, was die Leitfähigkeitsbestimmung ungenau macht bzw. einen hohen Wartungsaufwand mit sich bringt.

Die DE 10 2009 055 007 A1 schlägt zur Vermeidung der Verkalkung des Leitfähigkeitssensors vor, diesen im Weich- oder Verschnittwasser anzuordnen. Gemäß dieser Druckschrift beträgt in guter Näherung die Leitfähigkeit eines Rohwassers ca. 95% der Leitfähigkeit eines aus diesem gewonnenen Weichwassers. Dadurch kann von der Weichwasserleitfähigkeit direkt auf die Rohwasserleitfähigkeit rückgeschlossen werden. Falls der Leitfähigkeitssensor im Verschnittwasser angeordnet ist, verändert sich der Umrechnungsfaktor entsprechend der Anteile von Weich- und Rohwasser im Verschnittwasser. Mittels der Rohwasserleitfähigkeit kann dann wiederum die Rohwasserhärte bestimmt werden.

Zwar wird bei diesem Vorgehen eine Verkalkung des Leitfähigkeitssensors vermieden, jedoch ist das Verfahren durch die Annahme eines bestimmten Verhältnisses zwischen Weichwasserleitfähigkeit und Rohwasserleitfähigkeit nur näherungsweise in der Lage, die Rohwasserleitfähigkeit zu bestimmen. Bei geringen Schwankungen in der Rohwasserzusammensetzung kann das Verfahren in der Praxis eine gute Verschneidungsgenauigkeit erreichen; bei größeren Schwankungen in der Rohwasserzusammensetzung treten jedoch merkliche Ungenauigkeiten auf.

## Aufgabe der Erfindung

Es ist die Aufgabe der vorliegenden Erfindung, beim Betrieb einer automatischen Verschneideeinrichtung, mit der ein Verschnittwasserstrom aus einem weichwasserführenden Teilstrom und einem rohwasserführenden Teilstrom gemischt wird, die Härte des Verschnittwassers mit hoher Zuverlässigkeit und einer verbesserten Genauigkeit einzustellen.

## Kurze Beschreibung der Erfindung

Diese Aufgabe wird gelöst durch ein Verfahren gemäß Anspruch 1. Im Rahmen der vorliegenden Erfindung kann die Leitfähigkeit des Rohwassers nicht nur geschätzt, sondern (im Rahmen der Messgenauigkeit der verwendeten Leitfähigkeitssensoren und gegebenenfalls Durchflussmesser) genau berechnet werden. Insbesondere sind keine Annahmen über die Rohwasserqualität bzw. die Änderung der Leitfähigkeit des Rohwassers durch eine Enthärtung nötig.

Im Rahmen der Erfindung werden zwei Leitfähigkeitssensoren eingesetzt, nämlich ein Leitfähigkeitssensor im Weichwasserbereich im ersten Teilstrom, nach der Enthärtung, und ein Leitfähigkeitssensor im Verschnittwasserbereich. An diesen Positionen sind die Leitfähigkeitssensoren praktisch keinen merklichen oder im Vergleich zum Rohwasser reduzierten Wasserhärten ausgesetzt, so dass diese Leitfähigkeitssensoren nicht oder allenfalls sehr langsam verkalken. Die Leitfähigkeit des Verschnittwassers ergibt sich aus den Leitfähigkeiten im Weichwasser und im Rohwasserwasser und den Anteilen von Weichwasser und Rohwasser im Verschnittwasser. Zwei der Leitfähigkeiten werden erfindungsgemäß direkt gemessen, und die Anteile von Weichwasser (erster Teilstrom) und Rohwasser (zweiter Teilstrom) im Verschnittwasser lassen sich relativ leicht ermitteln, beispielsweise mittels zweier Durchflussmesser. Dann kann aber die einzige Unbekannte in der gegenseitigen Abhängigkeit von Weichwasser-, Verschnittwasser- und Rohwasserleitfähigkeit, das ist die Leitfähigkeit des Rohwassers, leicht errechnet werden.

Bei dieser Berechnung brauchen keinerlei Annahmen über die Zusammensetzung des Rohwassers gemacht zu werden. Insbesondere wird keine Annahme darüber benötigt, wie sich die Leitfähigkeit eines Rohwassers durch Enthärtung, also durch stöchiometrischen Ersatz der $Ca^{2+}$- und $Mg^{2+}$-Ionen jeweils durch zwei $Na^+$-Ionen, ändert. Eine solche Annahme braucht nicht getroffen zu werden, da eine entsprechende, aber exakte Information durch den zweiten Leitfähigkeitssensor erhalten wird.

Mittels der Leitfähigkeit des Rohwassers kann dann wiederum die Härte des Rohwassers ermittelt werden. Hierzu ist typischerweise in einer elektronischen Steuereinrichtung eine Kalibrierkennlinie oder eine Kalibrierfunktion gespeichert. Mithilfe der Rohwasserhärte und der Weichwasserhärte können dann wiederum Anteile für den enthärteten, ersten Teilstrom und den rohwasserführenden, zweiten Teilstrom bestimmt werden, mit denen eine vorgegebene, in der Regel in der elektronischen Steuereinrichtung gespeicherten Sollhärte SW im Verschnittwasser erreicht wird. Diese Anteile werden dann automatisch eingestellt, beispielsweise über eine Feedback-Regelung mit zwei Durchflussmessern, die die beiden Teilströme direkt oder indirekt ermitteln.

Die Information über die Anteile der Teilströme $A_{teil1}=V_{teil1}/V_{verschnitt}$ und $A_{teil2}=V_{teil2}/V_{verschnitt}$ am Verschnittwasserstrom, wobei $A_{teil1}+A_{teil2}=1$, ist identisch mit der Information über ein Verschnittverhältnis $VVH=V_{teil1}/V_{teil2}$ im Verschnittwasserstrom, wobei $A_{teil1}=VVH/(1+VVH)$ und $A_{teil2}=1/(VVH+1)$.

Die Weichwasserhärte beträgt typischerweise 0°dH bis 1°dH, je nach Art der verwendeten Enthärtungsvorrichtung (üblicherweise ein mit $Na^+$-Ionen beladenes Ionentauscherharz) in der Wasserenthärtungsanlage. Meist wird eine feste, für die verwendete Enthärtungsvorrichtung typische Weichwasserhärte angenommen, die beispielsweise werkseitig für die Wasserenthärtungsanlage bestimmt (und in der elektronischen Steuereinrichtung programmiert) wurde, oder die einfach in guter Näherung zu 0°dH angenommen wird. Es ist aber auch möglich, die Weichwasserhärte abhängig von einem Erschöpfungsgrad der Enthärtungsvorrichtung zu bestimmen.

## Varianten der Erfindung

Bei dem erfindungsgemäßen Verfahren wird $LF_{roh}$ berechnet mit der Formel

$$LF_{roh} = \frac{LF_{verschnitt} - A_{teil1} \cdot LF_{weich}}{A_{teil2}}.$$

Mit dieser Formel lässt sich die Rohwasserleitfähigkeit $LF_{roh}$ leicht berechnen. Man beachte wiederum, dass die Anteile der Teilströme $A_{teil1}$, $A_{teil2}$ auch über das Verschnittverhältnis WH ausgedrückt werden können (siehe oben), was den Formelzusammenhang dieser Variante jedoch nicht verändert.

Besonders bevorzugt ist eine Variante der Erfindung, bei der die Anteile der Teilströme $A_{teil1}$, $A_{teil2}$ am Verschnittwasserstrom $V_{verschnitt}$ mittels zweier Durchflussmesser bestimmt werden. Dadurch ist eine sehr exakte Bestimmung und Einstellung der Teilströme möglich, wobei die Verstellposition der automatischen Verschneideeinrichtung, durch die die Anteile eingestellt werden, im Feedback-Verfahren geregelt werden kann. Durch zwei Durchflussmesser können alle drei Ströme in der Wasserenthärtungsanlage (erster Teilstrom, zweiter Teilstrom, Gesamtrohwasserstrom/Verschnittwasserstrom) bestimmt werden, ggf. über Differenzbildung oder Summenbildung.

Eine vorteilhafte Weiterentwicklung dieser Variante sieht vor, dass zur Bestimmung der Anteile der Teilströme $A_{teil1}$, $A_{teil2}$ ein erster Durchflussmesser im ersten Teilstrom $V_{teil1}$ angeordnet ist, und ein zweiter Durchflussmesser im Verschnittwasserstrom $V_{verschnitt}$ angeordnet ist. Durch die Anordnung der beiden Durchflussmesser im Weichwasser und im Verschnittwasser kann einer Verkalkung der Durchflussmesser vorgebeugt werden. Aus $V_{teil1}$ und Verschnitt können über $A_{teil1} + V_{teil2} = V_{verschnitt}$ und $A_{teil1} = V_{teil1}/V_{verschnitt}$ und $A_{teil2} = V_{teil2}/V_{verschnitt}$ die Anteile $A_{teil1}$ und $A_{teil2}$ bestimmt

$$LF_{roh} = \frac{V_{verschnitt} \cdot LF_{verschnitt} - V_{teil1} \cdot LF_{weich}}{V_{teil2}}.$$

werden. $LF_{roh}$ ergibt sich dann zu                    Alternativ kann auch beispielsweise je ein Durchflussmesser im ersten Teilstrom und im zweiten Teilstrom vorgesehen sein, oder auch ein Durchflussmesser im zweiten Teilstrom und ein Durchflussmesser im Verschnittwasserstrom, oder ein Durchflussmesser im zufließenden Rohwasserstrom und ein Durchflussmesser in einem der Teilströme.

Bei einer zweiten vorteilhaften Verfahrensvariante der Erfindung werden die Anteile der Teilströme $A_{teil1}$, $A_{teil2}$ über eine Verstellposition der automatischen Verschneideeinrichtung ermittelt, insbesondere wobei die automatische Verschneideeinrichtung einen Sensor zur Ermittlung der Verstellposition aufweist. Aus der bekannten (nämlich gezielt eingestellten und/oder sensorisch überprüften) Verstellposition der automatischen Verschneideeinrichtung mit verstellpositionsabhängigen, aber bekannten Strömungsverhältnissen können die sich einstellenden Anteile auch ohne Durchflussmessgeräte bestimmt werden. Dies ist apparativ besonders einfach und entsprechend kostengünstig. Die Anteile der Teilströme können dann für verschiedene Verstellpositionen in einer Tabelle in der elektronischen Steuereinrichtung hinterlegt sein, oder durch eine programmierte Umrechnungsfunktion berechenbar sein.

Besonders bevorzugt ist eine Verfahrensvariante, bei der die vom Leitfähigkeitssensor im enthärteten ersten Teilstrom $V_{teil1}$ gemessene Leitfähigkeit $LF_{weich}$ und die vom Leitfähigkeitssensor im Verschnittwasserstrom $V_{verschnitt}$ gemessene Leitfähigkeit $LF_{verschnitt}$ über einen Mittelungszeitraum T oder eine Anzahl N von Einzelmessungen gemittelt werden, und die gemittelten Werte von $LF_{weich}$ und $LF_{verschnitt}$ für die Berechnung von $LF_{roh}$ verwendet werden. Die Leitfähigkeiten von Weichwasser und Verschnittwasser unterscheiden sich oft nur geringfügig (meist um ca. 1-5%), sodass bereits kleine Messfehler, die im Bereich des statistischen Rauschens liegen, die Berechnung der Leitfähigkeit des Rohwassers beeinträchtigen können. Durch eine Mittelung kann die Berechnung der Rohwasserleitfähigkeit dann deutlich zuverlässiger gemacht werden.

Besonders bevorzugt ist eine Weiterentwicklung dieser Variante, bei der während des Mittelungszeitraums T oder über die Anzahl N von Einzelmessungen die Anteile der Teilströme $A_{teil1}$, $A_{teil2}$ durch die automatische Verschneideeinrichtung nicht verändert werden. Die Mittelwertbildung und eine Nachregelung der Verstellposition der Verschneideeinrichtung erfolgen dann typischerweise immer jeweils nach Ablauf eines Mittelungszeitraums T oder nach der vorgegebenen Anzahl N von Einzelmessungen von $LF_{weich}$ und $LF_{verschnitt}$. Diese Variante ist sehr einfach zu realisieren, und hält den Verschleiß an der Verschneideeinrichtung gering.

Bei einer alternativen Weiterentwicklung ist vorgesehen, dass auch die Anteile der beiden Teilströme $A_{teil1}$, $A_{teil2}$ über den Mittelungszeitraum T oder über eine Anzahl N von Einzelermittlungen gemittelt werden, und die gemittelten Werte von $A_{teil1}$ und $A_{teil2}$ für die Berechnung von $LF_{roh}$ verwendet werden. In dieser Variante können insbesondere "gleitende Durchschnitte" der Werte für eine ständige Nachregelung verwendet werden, d.h. es wird jeweils die älteste Messung in der zu mittelnden Wertemenge durch die gerade erfolgte neueste Messung ersetzt. Dadurch kann eine besonders genaue Bestimmung von $LF_{roh}$ bzw. eine besonders genaue Verschneidung realisiert werden.

Bevorzugt ist es gemäß einer Weiterentwicklung weiterhin, dass der Mittelungszeitraum T wenigstens 2 Minuten, bevorzugt wenigsten 10 Minuten umfasst oder die Anzahl N von Einzelmessungen oder Einzelermittlungen wenigstens 100, bevorzugt wenigstens 1000 beträgt. Diese Größen haben sich in der Praxis bewährt und gestatten in aller Regel eine gute Kompensation von statistischen Messfehlern der Leitfähigkeitssensoren. Vor allem falls Leitfähigkeitsmessungen in sehr schneller Folge erfolgen können (mit der Zeitdauer einer Einzelmessung im Bereich 10 ms oder weniger), können auch vergleichsweise kurze Mittelungszeiträume T im Bereich von 10 Sekunden oder weniger, insbesondere 1 Sekunde oder weniger, in Betracht kommen. Besonders bevorzugt ist weiterhin eine Weiterentwicklung, bei der ein Teil der Werte, die in einen Mittelungszeitraum T fallen oder zu einer Anzahl N von Einzelmessungen oder Einzelermittlungen gehören, für die Bestimmung des gemittelten Werts von $LF_{weich}$ und/oder $LF_{verschnitt}$ und/oder der Anteile $A_{teil1}$, $A_{teil2}$ außer Betracht bleiben. Dadurch kann die Qualität der Mittelwertbildung verbessert werden. Nicht vertrauenswürde und/oder extreme Werte werden ignoriert und verfälschen somit die gemittelten Werte nicht. Es ist dabei vorgesehen, dass die außer Betracht bleibenden Werte außerhalb eines vorgegebenen Werteintervalls liegen, oder dass die außer Betracht bleibenden Werte zu einem vorgegebenen relativen Anteil von höchsten oder niedrigsten Werten im Mittelungszeitraum T oder innerhalb der N Einzelmessungen oder Einzelermittlungen gehören. Dieses Vorgehen hat sich in der Praxis besonders bewährt und liefert von extremen Messfehlern unverfälschte gemittelte Werte. Beispielsweise können generell alle Leitfähigkeits-Einzelmessungen, bei denen die Leitfähigkeit nicht zwischen 200 und 1500 µS/cm liegt, als offensichtliche Fehlmessungen ignoriert (d.h. nicht in die Mittelwertbildung einbezogen) werden. Ebenso ist es möglich, z.B. die 10% höchsten und die 10% niedrigsten Leitfähigkeits-Einzelmessungen im Mittelungszeitraum T oder unter den N betrachteten Leitfähigkeits-Einzelmessungen zu ignorieren.

Bei einer besonders bevorzugten Variante des erfindungsgemäßen Verfahrens ist vorgesehen, dass in regelmäßigen Abständen, bevorzugt zumindest alle 10 Minuten, besonders bevorzugt zumindest alle 2 Minuten, automatisch

- die Leitfähigkeit des Rohwassers $LF_{roh}$ aus aktuellen Werten von $LF_{weich}$, $LF_{verschnitt}$, $A_{teil1}$ und $A_{teil2}$ neu berechnet wird,
- die Härte des Rohwassers $H_{roh}$ daraus neu abgeleitet wird,
- die einzustellenden Anteile der Teilströme $A_{teil1}$, $A_{teil2}$ damit neu berechnet werden,
- und die Verstellposition der automatischen Verschneideeinrichtung entsprechend nachgeregelt wird. Dadurch kann zeitnah auf etwaige Veränderungen der Rohwasserqualität reagiert werden und die Genauigkeit der Verschneidung hoch gehalten werden. Man beachte, dass es umgekehrt bevorzugt ist, die regelmäßigen Abstände zu wenigstens 1 Minute oder länger zu wählen, um den Verschleiß an der Verschneideeinrichtung zu begrenzen.

Besonders vorteilhaft ist eine Verfahrensvariante, bei der die Härte des enthärteten ersten Teilstroms $H_{weich}$ mit $H_{weich}=0°dH$ angesetzt wird. Dies vereinfacht die Berechnung der Rohwasserhärte und ist in den meisten Anwendungsfällen ausrechend genau. Bei regelmäßiger, rechtzeitiger Regenerierung der in der Wasserenthärtungsanlage eingesetzten Enthärtungsvorrichtung bzw. Ionentauscher und nicht zu großer Durchflussmenge durch die Enthärtungsvorrichtung kann ein Härteschlupf meist vernachlässigt werden.

Besonders vorteilhaft ist auch eine Variante, bei der vorgesehen ist, dass eine Härte des Rohwassers $H_{roh}'$, die zur Steuerung eines Regeneriervorgangs einer Enthärtungsvorrichtung der Wasserenthärtungsanlage verwendet wird, mittels einer ersten Kalibrierfunktion K1 aus der berechneten Leitfähigkeit $LF_{roh}$ des Rohwassers abgeleitet wird, und dass die Härte des Rohwassers $H_{roh}$, die zur Steuerung der automatischen Verschneideeinrichtung verwendet wird, mittels einer zweiten Kalibrierfunktion K2 aus der berechneten Leitfähigkeit $LF_{roh}$ des Rohwassers abgeleitet wird. Wenn $H_{roh}'$ für relevante Leitfähigkeiten des Rohwassers aufgrund der unterschiedlichen Kalibrierkennlinien K1 und K2 höher ist als $H_{roh}$, kann die Regenerationssteuerung sicher vor Härtedurchbrüchen, und gleichzeitig die Verschneidungssteuerung realitätsnah gestaltet werden.

In den Rahmen der vorliegenden Erfindung fällt auch eine Wasserenthärtungsanlage gemäß Anspruch 11 mit einer automatischen Verschneideeinrichtung, mit einem Leitfähigkeitssensor in einem Weichwasserbereich und einem Leitfähigkeitssensor in einem Verschnittwasserbereich, eingerichtet zur Durchführung des obigen erfindungsgemäßen Verfahrens oder einer seiner Varianten. Die Wasserenthärtungsanlage verfügt über eine elektronische Steuereinrichtung, die entsprechend den vorgesehenen Verfahrensschritten programmiert ist.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1   den schematischen Aufbau einer Ausführungsform einer erfindungsgemäßen Wasserenthärtungsanlage, mit zwei Leitfähigkeitssensoren und zwei Durchflussmessern;

Fig. 2   den schematischen Aufbau einer weiteren Ausführungsform einer erfindungsgemäßen Wasserenthärtungsanlage, mit zwei Leitfähigkeitssensoren und einem Durchflussmesser sowie einem Sensor zur Ermittlung der Verstellposition der automatischen Verschneideeinrichtung;

Fig. 3   ein schematisches Ablaufdiagramm des erfindungsgemäßen Verfahrens.

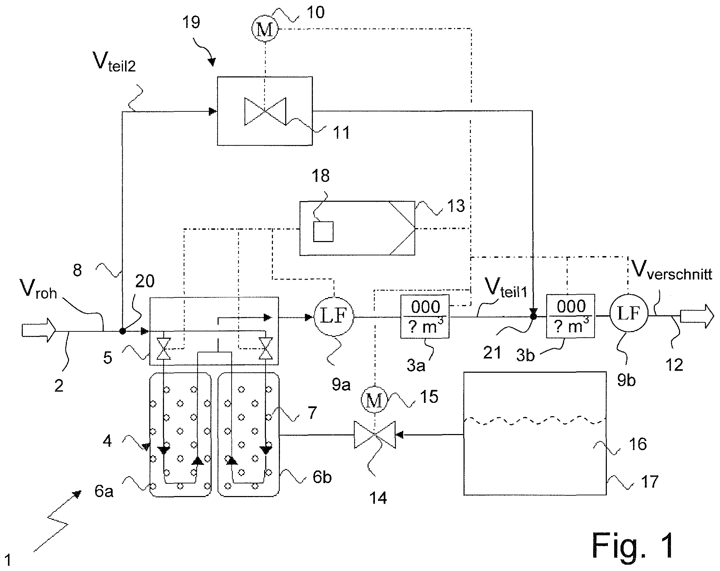

Die **Fig. 1** zeigt beispielhaft eine erfindungsgemäße Wasserenthärtungsanlage 1 zur Durchführung des erfindungsgemäßen Verfahrens.

Die Wasserenthärtungsanlage 1 ist über einen Zulauf 2 an ein lokales Wasserversorgungssystem, etwa das Trinkwassernetz, angeschlossen. Der am Zulauf 2 fließende gesamte Rohwasserstrom $V_{roh}$ teilt sich an einem Verzweigungspunkt 20 in zwei Teilströme auf.

Ein erster Teilstrom $V_{teil1}$ des (gesamten) Rohwasserstroms $V_{roh}$ fließt einer Enthärtungsvorrichtung 4 zu, welche insbesondere einen Steuerkopf 5 sowie zwei Tanks 6a, 6b mit Ionentauscherharz 7 aufweist. Ein zweiter Teilstrom $V_{teil2}$ fließt in eine Bypassleitung 8 ein.

Das in die Enthärtungsvorrichtung 4 einfließende Rohwasser des ersten Teilstroms $V_{teil1}$ durchströmt wenigstens einen der beiden Tanks 6a, 6b mit Ionentauscherharz 7, wobei das Wasser vollständig enthärtet wird. Dabei werden die Härtebildner Calcium- und Magnesium-Ionen stöchiometrisch gegen Natrium-Ionen ausgetauscht. Das enthärtete Wasser fließt anschließend durch einen Leitfähigkeitssensor 9a, mit dem die Leitfähigkeit $LF_{weich}$ im enthärteten ersten Teilstrom $V_{teil1}$ bestimmt wird, sowie durch einen Durchflusszähler 3a.

Der zweite Teilstrom $V_{teil2}$ in der Bypassleitung 8 passiert eine automatisch betätigbare Verschneideeinrichtung 19, hier umfassend ein mit einem Stellmotor 10 verstellbares Verschneideventil 11.

Der erste Teilstrom $V_{teil1}$ und der zweite Teilstrom $V_{teil2}$ werden schließlich an einem Vereinigungspunkt 21 zu einem Verschnittwasserstrom $V_{verschnitt}$ vereint, welcher einem Ablauf 12 zufließt. Der Ablauf 12 ist an eine nachfolgende Wasserinstallation, etwa die Frischwasserleitungen eines Gebäudes, angeschlossen. Der Verschnittwasserstrom $V_{verschnitt}$ wird mit einem Durchflussmesser 3b vermessen. Weiterhin wird die Leitfähigkeit $LF_{verschnitt}$ des Verschnittwassers mit dem Leitfähigkeitssensor 9b vermessen.

Die Messergebnisse der Leitfähigkeitssensoren 9a, 9b und der Durchflussmesser 3a, 3b werden an eine elektronische Steuereinrichtung 13 übertragen. Die elektronische Steuereinrichtung 13 wiederum kann den Stellmotor 10 des Verschneideventils 11 betätigen, und damit den zweiten Teilstrom $V_{teil2}$ einstellen; damit kann das Verhältnis des zweiten Teilstroms $V_{teil2}$ zum ersten Teilstrom $V_{teil1}$, dessen Strömungsquerschnitt hier nicht veränderlich ist, verändert werden. Die elektronische Steuereinrichtung 13 kann als zur automatischen Verschneideeinrichtung 19 zugehörig angesehen werden.

In der elektronischen Steuereinrichtung 13 ist ein Sollwert SW für eine Verschnittwasserhärte hinterlegt. Um die gewünschte Wasserhärte $H_{verschnitt}$ im Verschnittwasser am Ablauf 12 bereitzustellen, wird wie folgt vorgegangen.

Die Steuereinrichtung 13 liest zunächst eine momentane Weichwasserleitfähigkeit $LF_{weich}$ am Leitfähigkeitssensor 9a und eine momentane Verschnittwasserleitfähigkeit $LF_{verschnitt}$ am Leitfähigkeitssensor 9b aus. Gleichzeitig werden der momentane Teilstrom $V_{teil1}$ mit dem Durchflussmesser 3a und der momentane Verschnittwasserstrom $V_{verschnitt}$ bestimmt.

Die Leitfähigkeit des Rohwasser $LF_{roh}$ wird sodann berechnet mit der Formel

$$LF_{roh} = \frac{LF_{verschnitt} - A_{teil1} \cdot LF_{weich}}{A_{teil2}},$$

wobei $A_{teil1}=V_{teil1}/V_{verschnitt}$ und $A_{teil2}=V_{teil2}/V_{verschnitt}$ ist. Mit dem Zusammenhang $V_{teil1}=V_{teil2}/V_{verschnitt}$ kann die Variable $V_{teil2}$ eliminiert werden, und es ergibt sich die Formel

$$LF_{roh} = \frac{V_{verschnitt} \cdot LF_{verschnitt} - V_{teil1} \cdot LF_{weich}}{V_{verschnitt} - V_{teil1}}.$$

Diese Formel ist in einem Speicher 18 der Steuereinrichtung 13 hinterlegt, ebenso wie alle anderen für die Steuer- und Regelfunktionen der Wasserenthärtungsanlage 1 notwendigen Informationen.

Beträgt beispielsweise die $LF_{weich}=660\mu S/cm$, $LF_{verscnnitt}=645\mu S/cm$, $V_{teil1}=5.000$ cm$^3$/min und $V_{verschnitt}=15,000$ cm$^3$/min, so ergibt sich $LF_{roh}$ zu $638\mu S/cm$.

Aus dieser Leitfähigkeit des Rohwassers $LF_{roh}$ kann nun die Rohwasserhärte bestimmt werden. Man beachte, dass sich in dieser Situation unter der Annahme, dass die Rohwasserleitfähigkeit 95% der Weichwasserleitfähigkeit beträgt, eine Rohwasserleitfähigkeit von 627 $\mu S/cm$ ergeben hätte, was einer Abweichung von fast 2% entspricht.

In der gezeigten Ausführungsform wird die Rohwasserhärte aus der Rohwasserleitfähigkeit $LF_{roh}$ zweimal auf unterschiedliche Weise durch die Steuereinrichtung 13 berechnet. Zum einen wird mit einer ersten Kalibrierkennlinie K1 eine Rohwasserhärte $H_{roh}'$ bestimmt, die für die Regenerationssteuerung der Enthärtungsvorrichtung 4 verwendet wird. Die erste Kalibrierkennlinie K1 beruht hier auf einem Umrechnungsfaktor von hier 30 $\mu S/cm$ pro °dH, was im Speicher 18 der Steuereinrichtung 13 hinterlegt ist. Im obigen Beispiel mit $LF_{roh}=638\mu S/cm$ ergibt sich damit eine Rohwasserhärte $H_{roh}'$ für Zwecke der Regenerationssteuerung von 21,3°dH.

Zum anderen wird mit einer zweiten Kalibrierkennlinie K2 eine Rohwasserhärte $H_{roh}$ bestimmt, die für die Verschneidungssteuerung herangezogen wird. Die zweite Kalibrierkennlinie K2 beruht hier auf einem Umrechnungs-

faktor von 38 μS/°dH. Mit $LF_{roh}$=638μS/cm ergibt sich dann eine Rohwasserhärte $H_{roh}$ für Zwecke der Verschneidungs- steuerung von 16,8 °dH.

Mittels der Rohwasserhärte $H_{roh}$ können nun die notwendigen Anteile $A_{teil1}$, $A_{teil2}$ der beiden Teilströme $V_{teil1}$, $V_{teil2}$ am Verschnittwasserstrom $V_{verschnitt}$, um einen bestimmten Sollwert SW der Verschnittwasserhärte $H_{verschnitt}$ zu erreichen, von der Steuereinrichtung 13 berechnet werden.

Der Zusammenhang zwischen der Härte im Weichwasser $H_{weich}$, der Härte im Rohwasser $H_{roh}$ und der Härte $H_{verschnitt}$ im Verschnittwasser lautet

$$H_{verschnitt} = A_{teil1} \cdot H_{weich} + A_{teil2} \cdot H_{roh}.$$

Mit $A_{teil2}$=1-$A_{teil1}$ und aufgelöst nach $A_{teil1}$ ergibt sich

$$A_{teil1} = \frac{H_{roh} - H_{verschnitt}}{H_{roh} - H_{weich}}.$$

Mit $H_{verschnitt}$=SW ergibt sich dann ein Sollanteil $A_{teil1}$(SW) für den ersten Teilstrom $V_{teil1}$, auf den nun das Verschneideventil eingeregelt werden kann. Ist der momentane Anteil $A_{teil1}$=$V_{teil1}$/$V_{verschnitt}$ kleiner als $A_{teil1}$(SW), wird bei Verschneidung der Weichwasseranteil sodann durch Verstellen des Verschneideventils 11 erhöht. Ist der momentane Anteil $A_{teil1}$=$V_{teil1}$/$V_{verschnitt}$ größer als $A_{teil1}$(SW), wird der Weichwasseranteil durch Verstellen des Verschneideventils sodann erniedrigt.

In der Regel kann in guter Näherung $H_{weich}$ in obiger Formel als 0°dH angenommen werden, wodurch sich die Berechnung noch weiter vereinfacht.

Soll beispielsweise bei $H_{roh}$ von 16,8°dH aus obigem Beispiel die Verschnittwasserhärte auf 5,0°dH eingeregelt werden, also SW=5,0°dH, so ergibt sich bei einer angenommenen Weichwasserhärte $H_{weich}$ von 0°dH ein Sollanteil für den ersten Teilstrom $A_{teil1}$(SW)=0,70 oder 70%. Dieser Anteil wird dann von der elektronischen Steuereinrichtung 13 mittels des Stellmotors 10 am Verschneideventil 11 eingestellt.

Die elektronische Steuereinrichtung 13 überwacht auch den Erschöpfungszustand des Ionentauscherharzes 7 in den beiden Tanks 6a, 6b. Bei Wasserentnahmen wird die entnommene Weichwassermenge (vgl. der erste Teilstrom $V_{teil1}$ und den Wasserzähler 3a) jeweils mit der zugehörigen, für die Regenerationssteuerung berechneten momentanen Rohwasserhärte $H_{roh}$, gewichtet und von der aktuellen Restkapazität abgezogen. Ist ein Tank 6a, 6b erschöpft, so nimmt die elektronische Steuereinrichtung 13 den erschöpften Tank 6a, 6b vom Netz und unterzieht diesen einer Regeneration; der andere Tank 6a, 6b kann solange die Weichwasserbereitstellung übernehmen. Für die Regeneration wird ein Regenerationsventil 14 mit einem Stellmotor 15 durch die elektronische Steuereinrichtung 13 automatisch betätigt, wodurch Regeneriermittellösung (bevorzugt Salzsole) 16 aus einem Vorratsgefäß 17 durch den erschöpften Tank 6a, 6b strömt.

In einer Variante des dargestellten Verfahrens kann vorgesehen sein, für die Bestimmung der Rohwasserleit- fähigkeit $LF_{roh}$ auf gemittelte Werte von $LF_{weich}$ und $LF_{verschnitt}$ zurückzugreifen. Dazu wird typischerweise eine größere Zahl von Einzelmessungen, beispielsweise N=8 Messungen, durchgeführt und jeweils der Durchschnitt gebildet, vgl. die nachfolgende Tabelle 1 (Angaben jeweils in μS/cm):

*Tabelle 1*

| $N_i$ | 1 | 2 | 3 | 4 | 5 | 6 | 7 | 8 | Mittelwert |
|---|---|---|---|---|---|---|---|---|---|
| $LF_{weich}$ | 660 | 665 | 690 | 655 | 660 | 640 | 610 | 665 | 656 |
| $LF_{ver-schnitt}$ | 645 | 635 | 655 | 640 | 580 | 640 | 650 | 650 | 637 |

Die Mittelwertbildung vermeidet vor allem einzelne unsinnige Nachregelungen, hier etwa bei den Messungen Nr. 5 (mit offensichtlich zu niedriger $LF_{verschnitt}$) und Nr. 7 (wo $LF_{verschnitt}$ größer als $LF_{weich}$ gemessen wurde, was physikalisch unplausibel ist). Eine Nachregelung der Verstellposition der Verschneideeinrichtung 19 erfolgt hier jeweils, nachdem (hier) N=8 Einzelmessungen durchgeführt wurden und die Mittelwertbildung mit diesen Einzelmessungen erfolgt ist, auf Basis der erhaltenen Mittelwerte. Man beachte, dass die Einzelmessungen gleichmäßig über den Zeitraum zwischen zwei Nachregelungen verteilt werden können, oder auch gebündelt erfolgen können, insbesondere alle kurz vor Ablauf des Zeitraums zwischen zwei Nachregelungen.

Zusätzlich ist es möglich, einzelne Werte einer Gruppe von Werten für die Mittelwertbildung zu verwerfen, beispielsweise in obigem Beispiel jeweils den höchsten und den niedrigsten Messwert aus jeder Gruppe von N=8 Einzelmessungen, vgl. Tabelle 2 mit entsprechenden Streichungen (Angaben wiederum in μS/cm). Dadurch kann die Qualität der Mittelung in der Regel weiter verbessert werden.

*Tabelle 2*

| $N_i$ | 1 | 2 | 3 | 4 | 5 | 6 | 7 | 8 | Mittelwert |
|---|---|---|---|---|---|---|---|---|---|
| $LF_{weich}$ | 660 | 665 | | 655 | 660 | 640 | | 665 | 658 |
| $LF_{ver-schnitt}$ | 645 | 635 | | 640 | | 640 | 650 | 650 | 643 |

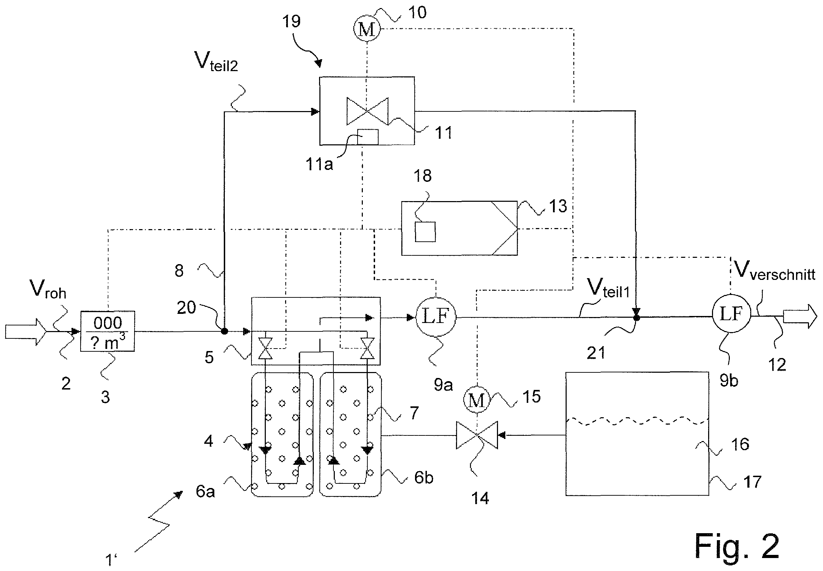

In der **Fig. 2** ist eine alternative Bauform einer erfindungsgemäßen Wasserenthärtungsanlage 1' dargestellt. Es werden nur die wesentlichen Unterschiede im Vergleich zur vorhergehenden Bauform erläutert.

Bei dieser Wasserenthärtungsanlage 1' gibt es nur einen Durchflussmesser 3 im noch unaufgeteilten zuflie-ßenden Rohwasserstrom $V_{roh}$. Das Verschneideventil 11 ist hier mit einem zusätzlichen Sensor 11a versehen, mit dem die Verstellposition des Verschneideventils 11, hier gemessen als ausgefahrene Länge eines Sperrstifts, ausgelesen werden kann. In der Steuereinrichtung 13 ist dazu beispielsweise die folgende Tabelle 3 hinterlegt:

*Tabelle 3*

| Ausgefahrene Länge | $A_{teil1}$ | $A_{teil2}$ |
|---|---|---|
| 0 mm | 0,25 | 0,75 |
| 1 mm | 0,30 | 0,70 |
| 2 mm | 0,40 | 0,60 |
| 3 mm | 0,55 | 0,45 |
| 4 mm | 0,75 | 0,25 |
| 5 mm | 1 | 0 |

Der Sperrstift kann hier zwischen 0 mm und 5 mm ausgefahren werden. Bei voll eingefahrenem Sperrstift (Position 0 mm) ist der größtmögliche zweite Teilstrom $V_{teil2}$ von 75% am Verschnittwasserstrom $V_{verschnitt}$ eingerichtet. Der zweite Teilstrom $V_{teil2}$ kann durch vollständiges Ausfahren des Sperrstifts (Position 5 mm) vollständig abgesperrt werden; in diesem Fall wird am Auslass 12 Weichwasser zur Verfügung gestellt.

Aus der Position des Sperrstifts kann dann jederzeit die Aufteilung der Anteile $A_{teil1}$, $A_{teil2}$ ermittelt werden. Anteile $A_{teil1}$, $A_{teil2}$ zu ausdrücklich tabellierten Positionen können direkt aus der Tabelle 3 abgelesen werden, und zu Positionen des Sperrstifts zwischen den angegebenen Tabellenpunkten werden die Anteile $A_{teil1}$, $A_{teil2}$ durch lineare Interpolation bestimmt. So entspricht beispielsweise eine ausgefahrene Länge von 1,5 mm einem Anteil $A_{teil1}$ von 35%, oder ein Anteil $A_{teil1}$ von 60% einer ausgefahrenen Länge von 3,25 mm.

In dieser Ausführungsform ist für die Verschneidungssteuerung kein Durchflussmesser notwendig. Mit dem Durchflussmesser 3 wird (zusammen mit dem momentanen, bei einer jeweiligen Wasserentnahme auf den ersten Teilstrom $V_{teil1}$ entfallenden Anteil $A_{teil1}$ und der momentanen Rohwasserhärte $H_{roh}$') hier lediglich die absolute Wassermenge, die seit einer letzten Regeneration der Enthärtungsvorrichtung 4 behandelt worden ist, mitverfolgt, um die nächste Regeneration rechtzeitig auslösen zu können.

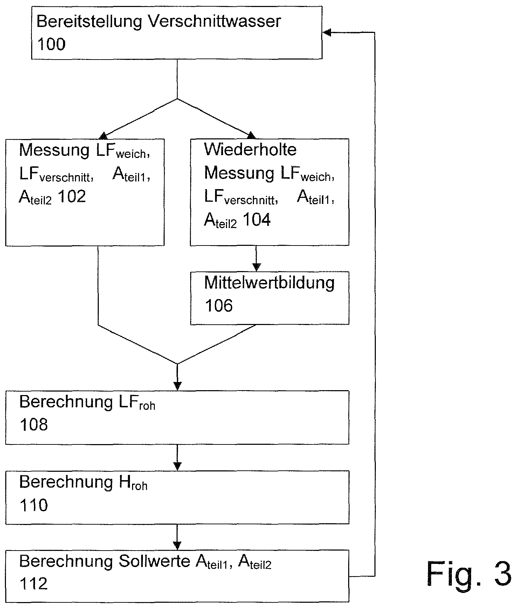

**Fig. 3** gibt illustriert in einem Diagramm den Ablauf des erfindungsgemäßen Verfahrens, wie es beispielsweise in der Wasserenthärtungsanlage der Fig. 1 abläuft.

Die Wasserenthärtungsanlage stellt im Normalbetrieb kontinuierlich Verschnittwasser zur Verfügung 100, wobei die Anteile $A_{teil1}$ von enthärtetem Wasser (erster Teilstrom) und $A_{teil2}$ von nicht enthärtetem Wasser (zweiter Teilstrom) im Verschnittwasser, auf die die automatische Verschneideeinrichtung eingeregelt wird, vorgegeben sind, etwa durch eine vorangegangene Berechnung (siehe Schritt 112) oder eine Standard-Programmierung für den Beginn des erfindungsgemäßen Verfahrens. Mit diesen Anteilen wird zumindest näherungsweise ein vorgegebener Sollwert SW als Härte des Verschnittwassers $H_{verschnitt}$ erhalten.

Typischerweise nach Ablauf eines gewissen Zeitraums seit Verfahrensbeginn oder seit der letzten Neuberech-nung der Anteile $A_{teil1}$, $A_{teil2}$ (siehe Schritt 112), beispielsweise nach Ablauf von 10 Minuten, erfolgt eine Messung der aktuellen Weichwasserleitfähigkeit $LF_{weich}$, der aktuellen Verschnittwasserleitfähigkeit $LF_{verschnitt}$ und hier auch der aktuellen Anteile $A_{teil1}$, $A_{teil2}$ 102. Alternativ können auch mehrere Messungen dieser Werte erfolgen 104, insbesondere verteilt über den besagten gewissen Zeitraum, und anschließend wird eine Mittelwertbildung 106 vorgenommen. Man beachte, dass die Anteile $A_{teil1}$, $A_{teil2}$ auch ohne Durchflussmessungen aus der Verstellposition der automatischen Verschneideeinrichtung bestimmt werden können.

Mit diesen Werten oder gemittelten Werten, unter Auswertung sowohl von $LF_{weich}$ als auch $LF_{verschnitt}$, die im Weichwasserbereich und Verschnittwasserbereich mit Sensoren gemessen wurden, wird die aktuelle Rohwasserleitfähigkeit $LF_{roh}$ berechnet 108. Aus dieser Rohwasserleitfähigkeit $LF_{roh}$ wird dann die Rohwasserhärte $H_{roh}$ für die Zwecke der Verschneidungssteuerung bestimmt 110. Zusätzlich kann jetzt auch die Berechnung einer Rohwaserhärte $H_{roh}'$ für die Zwecke der Regenerationssteuerung erfolgen.

Mit der Rohwasserhärte $H_{roh}$ werden die Sollanteile der Teilströme im Verschnittwasser neu bestimmt 112, um eine Verschnittwasserhärte $H_{verschnitt}$ entsprechend dem vorgegebenen Sollwert SW zu erhalten. Sodann wird die Bereitstellung von Verschnittwasser 100 fortgesetzt, wobei nun die Anteile $A_{teil1}$, $A_{teil2}$ der Teilströme auf die soeben erhaltenen Sollwerte eingestellt bzw. eingeregelt werden. Nach Ablauf des besagten gewissen Zeitraums werden die Messungen 102, 104 wiederholt, und so fort.

**Patentansprüche**

1. Verfahren zum Betrieb einer Wasserenthärtungsanlage (1; 1') mit einer automatischen Verschneideeinrichtung (19), wobei ein zufließender Rohwasserstrom $V_{roh}$ aufgeteilt wird auf

   - einen ersten Teilstrom $V_{teil1}$, der enthärtet wird, und
   - einen zweiten Teilstrom $V_{teil2}$, der nicht enthärtet wird,

   und die beiden Teilströme $V_{teil1}$, $V_{teil2}$ zu einem Verschnittwasserstrom $V_{verschnitt}$ vereinigt werden,
   wobei die Anteile der beiden Teilströme $A_{teil1}$, $A_{teil2}$ am Verschnittwasserstrom $V_{verschnitt}$ von der automatischen Verschneideeinrichtung (19) so eingestellt werden, dass sich eine gewünschte Härte SW im Verschnittwasserstrom $V_{verschnitt}$ ergibt (100), wobei die einzustellenden Anteile der beiden Teilströme $A_{teil1}$, $A_{teil2}$ aus der Härte des Rohwassers $H_{roh}$ und der Härte des enthärteten Wassers $H_{weich}$ berechnet werden (112),
   und wobei die Härte des Rohwassers $H_{roh}$ aus der Leitfähigkeit des Rohwassers $LF_{roh}$ mittels einer Kalibrierkennlinie oder einer Kalibrierfunktion abgeleitet wird (110),
   **dadurch gekennzeichnet,**
   **dass** die einzustellenden Anteile der beiden Teilströme $A_{teil1}$, $A_{teil2}$ berechnet werden gemäß

   $$A_{teil1} = \frac{H_{roh} - H_{verschnitt}}{H_{roh} - H_{weich}},$$

   wobei $H_{verschnitt}$=SW gesetzt wird, und $A_{teil2}$=1-$A_{teil1}$;
   **dass** die Leitfähigkeit des enthärteten Wassers $LF_{weich}$ mit einem Leitfähigkeitssensor (9a) im enthärteten ersten Teilstrom $V_{teil1}$ gemessen wird, und die Leitfähigkeit des Verschnittwassers $LF_{verschnitt}$ mit einem Leitfähigkeitssensor (9b) im Verschnittwasserstrom $V_{verschnitt}$ gemessen wird, und die Anteile der Teilströme $A_{teil1}$, $A_{teil2}$ am Verschnittwasserstrom $V_{verschnitt}$ ermittelt werden (102, 104, 106),
   wobei die Anteile der Teilströme $A_{teil1}$, $A_{teil2}$ am Verschnittwasserstrom $V_{verschnitt}$ mittels zweier Durchflussmesser (3a, 3b) ermittelt werden oder über eine Verstellposition der automatischen Verschneideeinrichtung (19), welche einen Sensor (11a) zur Ermittlung der Verstellposition aufweist, ermittelt werden,
   und **dass** die Leitfähigkeit des Rohwassers $LF_{roh}$ aus der gemessenen Leitfähigkeit des Weichwassers $LF_{weich}$, der gemessenen Leitfähigkeit des Verschnittwassers $LF_{verschnitt}$ und den ermittelten Anteilen der Teilströme $A_{teil1}$, $A_{teil2}$ berechnet wird (108) gemäß

   $$LF_{roh} = \frac{LF_{verschnitt} - A_{teil1} \cdot LF_{weich}}{A_{teil2}}.$$

2. Verfahren nach Anspruch 1, **dadurch gekennzeichnet, dass** zur Bestimmung der Anteile der Teilströme $A_{teil1}$, $A_{teil2}$ ein erster Durchflussmesser (3a) im ersten Teilstrom $V_{teil1}$ angeordnet ist, und ein zweiter Durchflussmesser (3b) im Verschnittwasserstrom $V_{verschnitt}$ angeordnet ist.

3. Verfahren nach einem der vorhergehenden Ansprüche, **dadurch gekennzeichnet, dass** die vom Leitfähigkeitssensor (9a) im enthärteten ersten Teilstrom $V_{teil1}$ gemessene Leitfähigkeit $LF_{weich}$ und die vom Leitfähigkeitssensor (9b) im Verschnittwasserstrom $V_{verschnitt}$ gemessene Leitfähigkeit $LF_{verschnitt}$ über einen Mittelungszeitraum T oder eine Anzahl N von Einzelmessungen gemittelt werden (106), und die gemittelten Werte von $LF_{weich}$ und $LF_{verschnitt}$

für die Berechnung von $LF_{roh}$ verwendet werden (108).

4. Verfahren nach Anspruch 3, **dadurch gekennzeichnet, dass** während des Mittelungszeitraums T oder über die Anzahl N von Einzelmessungen die Anteile der Teilströme $A_{teil1}$, $A_{teil2}$ durch die automatische Verschneideeinrichtung (19) nicht verändert werden.

5. Verfahren nach Anspruch 3, **dadurch gekennzeichnet, dass** auch die Anteile der beiden Teilströme $A_{teil1}$, $A_{teil2}$ über den Mittelungszeitraum T oder über eine Anzahl N von Einzelermittlungen gemittelt werden, und die gemittelten Werte von $A_{teil1}$ und $A_{teil2}$ für die Berechnung von $LF_{roh}$ verwendet werden.

6. Verfahren nach einem der Ansprüche 3 bis 5, **dadurch gekennzeichnet, dass** der Mittelungszeitraum T wenigstens 2 Minuten, bevorzugt wenigsten 10 Minuten umfasst oder die Anzahl N von Einzelmessungen oder Einzelermittlungen wenigstens 100, bevorzugt wenigstens 1000 beträgt.

7. Verfahren nach einem der Ansprüche 3 bis 6, **dadurch gekennzeichnet, dass** ein Teil der Werte, die in einen Mittelungszeitraum T fallen oder zu einer Anzahl N von Einzelmessungen oder Einzelermittlungen gehören, für die Bestimmung des gemittelten Werts von $LF_{weich}$ und/oder $LF_{verschnitt}$ und/oder der Anteile $A_{teil1}$, $A_{teil2}$ außer Betracht bleiben,
und dass die außer Betracht bleibenden Werte

   - außerhalb eines vorgegebenen Werteintervalls liegen, oder
   - zu einem vorgegebenen relativen Anteil von höchsten oder niedrigsten Werten im Mittelungszeitraum T oder innerhalb der N Einzelmessungen oder Einzelermittlungen gehören.

8. Verfahren nach einem der vorhergehenden Ansprüche, **dadurch gekennzeichnet, dass** in regelmäßigen Abständen, bevorzugt zumindest alle 10 Minuten, besonders bevorzugt zumindest alle 2 Minuten, automatisch

   - die Leitfähigkeit des Rohwassers $LF_{roh}$ aus aktuellen Werten von $LF_{weich}$, $LF_{verschnitt}$, $A_{teil1}$ und $A_{teil2}$ neu berechnet wird (108),
   - die Härte des Rohwassers $H_{roh}$ daraus neu abgeleitet wird (110),
   - die einzustellenden Anteile der Teilströme $A_{teil1}$, $A_{teil2}$ damit neu berechnet werden (112),
   - und die Verstellposition der automatischen Verschneideeinrichtung (19) entsprechend nachgeregelt wird (100).

9. Verfahren nach einem der vorhergehenden Ansprüche, **dadurch gekennzeichnet, dass** die Härte des enthärteten ersten Teilstroms $H_{weich}$ mit $H_{weich}=0°dH$ angesetzt wird.

10. Verfahren nach einem der vorhergehenden Ansprüche, **dadurch gekennzeichnet,**
**dass** eine Härte des Rohwassers $H_{roh}$', die zur Steuerung eines Regeneriervorgangs einer Enthärtungsvorrichtung (4) der Wasserenthärtungsanlage (1; 1') verwendet wird, mittels einer ersten Kalibrierfunktion K1 aus der berechneten Leitfähigkeit $LF_{roh}$ des Rohwassers abgeleitet wird,
und **dass** die Härte des Rohwassers $H_{roh}$, die zur Steuerung der automatischen Verschneideeinrichtung (19) verwendet wird, mittels einer zweiten Kalibrierfunktion K2 aus der berechneten Leitfähigkeit $LF_{roh}$ des Rohwassers abgeleitet wird.

11. Wasserenthärtungsanlage (1; 1') mit einer automatischen Verschneideeinrichtung (19), mit einem Leitfähigkeitssensor (9a) in einem Weichwasserbereich und einem Leitfähigkeitssensor (9b) in einem Verschnittwasserbereich, weiter mit zwei Durchflussmessern (3a, 3b) zur Ermittlung von Anteilen von Teilströmen $A_{teil1}$, $A_{teil2}$ an einem Verschnittwasserstrom $V_{verschnitt}$ oder mit einem Sensor (11a) zur Ermittlung der Verstellposition der automatischen Verschneideeinrichtung (19),
und mit einer elektronischen Steuereinrichtung (13) mit einem Speicher (18), in welchem alle für die Steuer- und Regelfunktionen der Wasserenthärtungsanlage (1) notwendigen Informationen hinterlegt sind, eingerichtet zur Durchführung eines Verfahrens nach einem der Ansprüche 1 bis 10.

**Claims**

1. Method for operating a water softening plant (1; 1') comprising an automatic blending device (19), an incoming flow of untreated water $V_{roh}$ being divided into

- a first partial flow $V_{teil1}$ which is softened, and
- a second partial flow $V_{teil2}$ which is not softened,

and the two partial flows $V_{teil1}$, $V_{teil2}$ being combined into a flow of blended water $V_{verschnitt}$,

the proportions of the two partial flows $A_{teil1}$, $A_{teil2}$ in the flow of blended water $V_{verschnitt}$ being adjusted by the automatic blending device (19) such that a desired hardness SW results in the flow of blended water $V_{verschnitt}$ (100),

the proportions to be adjusted of the two partial flows $A_{teil1}$, $A_{teil2}$ being calculated (112) from the hardness of the untreated water $H_{roh}$ and from the hardness of the softened water $H_{weich}$,

and the hardness of the untreated water $H_{roh}$ being derived (110) from the conductivity of the untreated water $LF_{roh}$ by a calibration characteristic curve or a calibration function,

**characterised in that**

the proportions to be adjusted of the two partial flows $A_{teil1}$, $A_{teil2}$ are calculated according to

$$A_{teil1} = \frac{H_{roh}-H_{verschnitt}}{H_{roh}-H_{weich}},$$ wherein $H_{verschnitt}$=SW is set and $A_{teil2}$=1-$A_{teil1}$;

that the conductivity of the softened water $LF_{weich}$ is measured by a conductivity sensor (9a) in the softened first partial flow $V_{teil1}$, and the conductivity of the blended water $LF_{verschnitt}$ is measured by a conductivity sensor (9b) in the blended water flow $V_{verschnitt}$, the proportions of the partial flows $A_{teil1}$, $A_{teil2}$ in the flow of blended water $V_{verschnitt}$ being determined (102, 104, 106),

wherein the proportions of the partial flows $A_{teil1}$, $A_{teil2}$ in the flow of blended water $V_{verschnitt}$ are determined by two flowmeters (3a, 3b) or are determined from an adjustment position of the automatic blending device (19), the automatic blending device (19) comprising a sensor (11a) for determining the adjustment position,

and that the conductivity of the untreated water $LF_{roh}$ is calculated (108) from the measured conductivity of the soft water $LF_{weich}$, from the measured conductivity of the blended water $LF_{verschnitt}$ and from the determined proportions of the partial flows $A_{teil1}$, $A_{teil2}$ according to

$$LF_{roh} = \frac{LF_{verschnitt}-A_{teil1}\cdot LF_{weich}}{A_{teil2}}.$$

2. Method according to claim 1, **characterised in that**, in order to determine the proportions of the partial flows $A_{teil1}$, $A_{teil2}$, a first flowmeter (3a) is arranged in the first partial flow $V_{teil1}$ and a second flowmeter (3b) is arranged in the blended water flow $V_{verschnitt}$.

3. Method according to any of the preceding claims, **characterised in that** the conductivity $LF_{weich}$, measured by the conductivity sensor (9a) in the softened first partial flow $V_{teil1}$, and the conductivity $LF_{verschnitt}$ measured by the conductivity sensor (9b) in the blended water flow $V_{verschnitt}$, are averaged (106) over an averaging period T or across a number N of single measurements, and the averaged values of $LF_{weich}$ and $LF_{verschnitt}$ are used to calculate $LF_{roh}$ (108).

4. Method according to claim 3, **characterised in that** the proportions of the partial flows $A_{teil1}$, $A_{teil2}$ are not changed by the automatic blending device (19) during the averaging period T or across the number N of single measurements.

5. Method according to claim 3, **characterised in that** the proportions of the two partial flows $A_{teil1}$, $A_{teil2}$ are also averaged over the averaging period T or across a number N of single determinations, and the averaged values of $A_{teil1}$ and $A_{teil2}$ are used to calculate $LF_{roh}$.

6. Method according to any of claims 3 to 5, **characterised in that** the averaging period T is at least 2 minutes, preferably at least 10 minutes, or the number N of single measurements or of single determinations is at least 100, preferably at least 1000.

7. Method according to any of claims 3 to 6, **characterised in that** some of the values which fall within an averaging period T or which belong to a number N of single measurements or single determinations are disregarded for the determination of the averaged value of $LF_{weich}$ and/or $LF_{verschnitt}$ and/or of the proportions of $A_{teil1}$, $A_{teil2}$, and that the disregarded values

- are outside a predetermined value interval, or
- belong to a predetermined relative proportion of highest or lowest values in the averaging period T or within the N single measurements or single determinations.

8. Method according to any of the preceding claims, **characterised in that**, at regular intervals, preferably at least every 10 minutes, more preferably at least every 2 minutes, in an automatic manner

- the conductivity of the untreated water $LF_{roh}$ is recalculated (108) from current values of $LF_{weich}$, $LF_{verschnitt}$, $A_{teil1}$ and $A_{teil2}$,
- the hardness of the untreated water $H_{roh}$ is derived again therefrom (110),
- the proportions, to be adjusted, of the partial flows $A_{teil1}$, $A_{teil2}$ are recalculated therefrom (112),
- and the adjustment position of the automatic blending device (19) is readjusted accordingly (100).

9. Method according to any of the preceding claims, **characterised in that** the hardness of the softened first partial flow $H_{weich}$ is set at $H_{weich} = 0°dH$.

10. Method according to any of the preceding claims, **characterised in that** a hardness of the untreated water $H_{roh}$, which is used to control a regeneration procedure of a softening device (4) of the water softening plant (1; 1') is derived from the calculated conductivity $LF_{roh}$ of the untreated water by a first calibration function K1, and **in that** the hardness of the untreated water $H_{roh}$ which is used to control the automatic blending device (19) is derived from the calculated conductivity $LF_{roh}$ of the untreated water by a second calibration function K2.

11. Water softening plant (1; 1') comprising an automatic blending device (19), a conductivity sensor (9a) in a soft water region and a conductivity sensor (9b) in a blended water region,
further comprising two flowmeters (3a, 3b) for determining proportions of partial flows $A_{teil1}$, $A_{teil2}$ in a blended water flow $V_{verschnitt}$ or comprising a sensor (11a) for determining the adjustment position of the automatic blending device (19),
and comprising an electronic control device (13) comprising a storage (18) in which all information required for the control and regulating functions of the water softening plant (1) is stored, configured to implement a method according to any of claims 1 to 10.

## Revendications

1. Procédé pour faire fonctionner un système d'adoucissement d'eau (1 ; 1') avec un dispositif de mélange automatique (19),
un flux d'eau brute entrant $V_{roh}$ étant divisé en

- un premier flux partiel $V_{teil1}$ qui est adouci et
- un deuxième flux partiel $V_{teil2}$ qui n'est pas adouci,

et les deux flux partiels $V_{teil1}$, $V_{teil2}$ étant réunis en un flux d'eau mélangée $V_{verschnitt}$, les proportions des deux flux partiels $A_{teil1}$, $A_{teil2}$ dans le flux d'eau mélangée Vverschnitt étant réglées par le dispositif de mélange automatique (19) de façon à obtenir une dureté souhaitée SW dans le flux d'eau mélangée $V_{verschnitt}$ (100),
les proportions à régler des deux flux partiels $A_{teil1}$, $A_{teil2}$ étant calculées à partir de la dureté de l'eau brute $H_{roh}$ et de la dureté de l'eau adoucie $H_{weich}$ (112),
et la dureté de l'eau brute $H_{roh}$ étant dérivée de la conductivité de l'eau brute $LF_{roh}$ au moyen d'une caractéristique d'étalonnage ou d'une fonction d'étalonnage (110), **caractérisé en ce**

**que** les proportions à régler des deux flux partiels $A_{teil1}$, $A_{teil2}$ sont calculées selon $A_{teil1} = \dfrac{H_{roh} - H_{verschnitt}}{H_{roh} - H_{weich}}$ où $H_{verschnitt}$ eSt posé = SW et $A_{teil2} = 1 - A_{teil1}$ ;
**que** la conductivité de l'eau adoucie $LF_{weich}$ est mesurée avec un capteur de conductivité (9a) dans le premier flux partiel adouci $V_{teil1}$ et la conductivité de l'eau mélangée $LF_{verschnitt}$ est mesurée avec un capteur de conductivité (9b) dans le flux d'eau mélangée $V_{verschnitt}$, et les proportions des flux partiels $A_{teil1}$, $A_{teil2}$ dans le flux d'eau mélangée $V_{verschnitt}$ sont déterminées (102, 104, 106),

les proportions des flux partiels $A_{teil1}$, $A_{teil2}$ dans le flux d'eau mélangée $V_{verschnitt}$ étant déterminées au moyen de deux débitmètres (3a, 3b) ou par une position de réglage du dispositif de mélange automatique (19), lequel présente un capteur (11a) pour déterminer la position de réglage,
et **que** la conductivité de l'eau brute $LF_{roh}$ est calculée à partir de la conductivité mesurée de l'eau douce $LF_{weich}$, de la conductivité mesurée de l'eau mélangée $LF_{verschnitt}$ et des proportions déterminées des flux partiels $A_{teil1}$, $A_{teil2}$ (108) selon

$$LF_{roh} = \frac{LF_{verschnitt} - A_{teil1} \cdot LF_{weich}}{A_{teil2}} \quad .$$

**2.** Procédé selon la revendication 1, **caractérisé en ce que** pour déterminer les proportions des flux partiels $A_{teil1}$, $A_{teil2}$, un premier débitmètre (3a) est disposé dans le premier flux partiel $V_{teil1}$ et un deuxième débitmètre (3b) est disposé dans le flux d'eau mélangée $V_{verschnitt}$.

**3.** Procédé selon l'une des revendications précédentes, **caractérisé en ce que** la conductivité $LF_{weich}$ mesurée par le capteur de conductivité (9a) dans le premier flux partiel $V_{teil1}$ adouci et la conductivité $LF_{verschnitt}$ mesurée par le capteur de conductivité (9b) dans le flux d'eau mélangée $V_{verschnitt}$ sont moyennées sur une période de calcul de moyenne T ou un nombre N de mesures individuelles (106) et les valeurs moyennes de $LF_{weich}$ et $LF_{verschnitt}$ sont utilisées pour le calcul de $LF_{roh}$ (108).

**4.** Procédé selon la revendication 3, **caractérisé en ce que** pendant la période de calcul de moyenne T ou sur le nombre N de mesures individuelles, les proportions des flux partiels $A_{teil1}$, $A_{teil2}$ ne sont pas modifiées par le dispositif de mélange automatique (19).

**5.** Procédé selon la revendication 3, **caractérisé en ce que** les proportions des deux flux partiels $A_{teil1}$, $A_{teil2}$ sont également moyennées sur la période de calcul de moyenne T ou sur un nombre N de déterminations individuelles, et les valeurs moyennes de $A_{teil1}$ et $A_{teil2}$ utilisées pour le calcul de $LF_{roh}$.

**6.** Procédé selon l'une des revendications 3 à 5, **caractérisé en ce que** la période de calcul de moyenne T est d'au moins 2 minutes, de préférence d'au moins 10 minutes, ou le nombre N de mesures individuelles ou de déterminations individuelles d'au moins 100, de préférence d'au moins 1000.

**7.** Procédé selon l'une des revendications 3 à 6, **caractérisé en ce qu'**une partie des valeurs qui tombent dans une période de calcul de moyenne T ou appartiennent à un nombre N de mesures individuelles ou déterminations individuelles ne sont pas prises en compte pour la détermination de la valeur moyenne de $LF_{weich}$ et/ou $LF_{verschnitt}$ et/ou des proportions $A_{teil1}$, $A_{teil2}$,
et que les valeurs non prises en compte

- se situent en dehors d'un intervalle de valeurs prédéfini ou
- appartiennent à une proportion relative prédéfinie de valeurs maximales ou minimales dans la période de calcul de moyenne T ou dans les N mesures individuelles ou déterminations individuelles.

**8.** Procédé selon l'une des revendications précédentes, **caractérisé en ce qu'**à intervalles réguliers, de préférence au moins toutes les 10 minutes, plus préférentiellement au moins toutes les 2 minutes, automatiquement,

- la conductivité de l'eau brute $LF_{roh}$ est recalculée à partir de valeurs actuelles de $LF_{weich}$, $LF_{verschnitt}$, $A_{teil1}$ et $A_{teil2}$ (108),
- la dureté de l'eau brute $H_{roh}$ en est nouvellement dérivée (110),
- les proportions à régler des flux partiels $A_{teil1}$, $A_{teil2}$ sont recalculées (112),
- et la position de réglage du dispositif de mélange automatique (19) est réajustée en conséquence (100).

**9.** Procédé selon l'une des revendications précédentes, **caractérisé en ce que** la dureté du premier flux partiel adouci $H_{weich}$ est fixée à $H_{weich} = 0°$ dH.

**10.** Procédé selon l'une des revendications précédentes, **caractérisé en ce qu'**une dureté de l'eau brute $H_{roh}$, qui est utilisée pour commander un processus de régénération d'un dispositif d'adoucissement (4) du système d'adoucissement d'eau (1 ; 1') est dérivée de la conductivité calculée $LF_{roh}$ de l'eau brute au moyen d'une première fonction d'étalonnage K1,

et **que** la dureté de l'eau brute $H_{roh}$ qui est utilisée pour commander le dispositif de mélange automatique (19) est dérivée de la conductivité calculée $LF_{roh}$ de l'eau brute au moyen d'une deuxième fonction d'étalonnage K2.

11. Système d'adoucissement d'eau (1 ; 1') comprenant un dispositif de mélange automatique (19), un capteur de conductivité (9a) dans une zone d'eau douce et un capteur de conductivité (9b) dans une zone d'eau mélangée, comprenant en outre deux débitmètres (3a, 3b) pour déterminer les proportions de flux partiels $A_{teil1}$, $A_{teil2}$ dans un flux d'eau mélangée $V_{verschnitt}$ ou un capteur (11a) pour déterminer la position de réglage du dispositif de mélange automatique (19), et comprenant un dispositif de commande électronique (13) avec une mémoire (18) dans laquelle sont stockées toutes les informations nécessaires pour les fonctions de commande et de régulation du système d'adoucissement d'eau (1), équipé pour mettre en oeuvre un procédé selon l'une des revendications 1 à 10.

Fig. 1

Fig. 2

Bereitstellung Verschnittwasser
100

Messung $LF_{weich}$, $LF_{verschnitt}$, $A_{teil1}$, $A_{teil2}$ 102

Wiederholte Messung $LF_{weich}$, $LF_{verschnitt}$, $A_{teil1}$, $A_{teil2}$ 104

Mittelwertbildung
106

Berechnung $LF_{roh}$
108

Berechnung $H_{roh}$
110

Berechnung Sollwerte $A_{teil1}$, $A_{teil2}$
112

Fig. 3

**IN DER BESCHREIBUNG AUFGEFÜHRTE DOKUMENTE**

**In der Beschreibung aufgeführte Patentdokumente**

- DE 102009055007 A1
- DE 102010001373 A1
- DE 102011003326 A1
- DE 102007059058 B3